# EUROPEAN PATENT APPLICATION

(11) **EP 3 136 220 A1**
(43) Date of publication of application: **01.03.2017**
(21) Application number: 15183070.0
(22) Date of filing: 30.08.2015
(51) Int. Cl.: G06F 3/12, H04N 1/00

(54) **METHOD OF PRINTING A DOCUMENT**

(71) Applicant: Wagner, Petra, 77723 Gengenbach (DE); Wagner, Dieter, 77723 Gengenbach (DE)
(72) Inventor: Wagner, Petra, 77723 Gengenbach (DE); Wagner, Dieter, 77723 Gengenbach (DE)
(74) Representative: Meyer zu Bexten, Elmar

(57) **Abstract**

**Problem**

A conventional method of printing requires establishing a direct communication link between the terminal apparatus and print device before selecting a file for printing. However, progressively nomadic usage patterns call for remote access to stationary printers. In this scenario, unauthorized passers-by and eavesdroppers must be prevented from picking up printouts.

**Solution**

The invention provides a solution for printing content - by smartphone or mobile device via an app and cloud infrastructure - at a stationary so-called printer point (PP), that is, a printer unit where the user may print the data previously sent. Transmission and storage of the data may be encrypted. For encryption, a quick response (QR) code may be used. Moreover, there are solutions for personal computers (PC). Further, the proposed platform may be expanded as a negotiating portal to document the progress and changes or activities by various negotiators (certified mail, logging, and documentation). To this end, the negotiators commit to this platform before the start of the transaction and approve of its independence and usage. Further, the proposed platform serves to transmit important documents as well as data or files with assured authenticity. This is facilitated by, inter alia, the QR code described further below for releasing the print job or retrieval of data or files and their encryption. The encryption code is included in the QR Code and generated anew per each use (as specified by the user). By means of this solution, documents of trade can be transmitted as well. To this end, the solution may provide for notaries to confirm the authenticity of a document electronically.

## Description

### Technical Field

The invention pertains to the field of service-oriented architecture, particularly cloud computing.

### Background Art

Within the context of networking hardware, a print server, or printer server, is a known device that connects a printer to client computers over a network. It accepts print jobs from the computers and sends the jobs to the appropriate printer, optionally queuing the jobs locally to accommodate the fact that work may arrive more quickly than the printer can actually handle. Ancillary functions include the ability to inspect the queue of jobs to be processed, the ability to reorder or delete waiting print jobs, or the ability to do various kinds of accounting.

State-of-the-art print servers may support a variety of industry-standard or proprietary printing protocols including Internet Printing Protocol, Line Printer Daemon protocol, NetWare, NetBIOS/NetBEUI, or JetDirect. An overview of the art is provided by GAST, Matthew S., et al. Network Printing: Building Print Services on Heterogeneous Networks. 1st edition. Sebastopol, CA: O'Reilly Media, 2000. ISBN 0596000383. p.1-304.

United States Patent US 9013729 B (OBA KAZUTAKA [US]; HATTORI TOMOKI [US]; RICOH AMERICAS CORP [US]; RICOH CO LTD [JP]) 06.06.2013 discloses, inter alia, a method that operates to print information and documents stored on a mobile terminal device.

### Summary of invention

The invention aims to provide an improved method of printing a document.

### Technical Problem

The conventional method requires establishing a local communication link between the terminal apparatus and print device before selecting a file for printing. However, progressively nomadic usage patterns call for remote access to stationary printers. In this scenario, unauthorized passers-by and eavesdroppers must be prevented from picking up printouts.

### Solution to Problem

The invention provides a solution for printing content - by smartphone or mobile device via an app and cloud infrastructure - at a stationary so-called printer point (PP), that is, a printer unit where the user may print the data previously sent. Transmission and storage of the data may be encrypted. For encryption, a quick response (QR) code may be used. Moreover, there are solutions for personal computers (PC). Further, the proposed platform may be expanded as a negotiating portal to document the progress and changes or activities by various negotiators (certified mail, logging, and documentation). To this end, the negotiators commit to this platform before the start of the transaction and approve of its independence and usage. Further, the proposed platform serves to transmit important documents as well as data or files with assured authenticity. This is facilitated by, inter alia, the QR code described further below for releasing the print job or retrieval of data or files and their encryption. The encryption code is included in the QR code and generated anew per each use (as specified by the user). By means of this solution, documents of trade can be transmitted as well. To this end, the solution may provide for notaries to confirm the authenticity of a document electronically.

### Advantageous effect of invention

This solution facilitates mobile working and meets the need for security, data protection, discretion, and reliability.

It would also be possible to permit a third party - such as an independent lawyer, expert, or administrator-to track changes and, if necessary, electronically make decisions. A conceivable application may be the proposed amendment of a section set in the system; if there is no decision, the referee decides.

The PP may be set up at airports, train stations, partner companies - e.g., for good network coverage, as a self-service terminal by courtesy of banks or retail chains -, or on separate occasions like fairs or sponsored events. Conceivable would also be a solution for Internet cafés or local installation on the mobile device of the user. It may be possible to print various formats, ranging from A4 paper to photos.

For instance, one could send camera pictures to a receiver and prepay the printout using one's own account. It may also be possible to change the photos and add text using a simple, browser-based program.

Based on this platform, a client may also conceivably commission a writer to create certain documents.

Using further embodiments of the invention, it should also be possible to send vouchers - such as for popular retail chains - to a specific recipient. The latter then has the opportunity to decide if she prints it in a PP or electronically saves it on her device.

By means of an app, the user may submit content, text, documents, and photos for printing. She is free to decide when and where she prints out the contents.

### Description of embodiments

The user installs an app for printing or transferring print data on a device such as her smartphone, tablet, or PC. Once content is displayed, there is an option to send this information via a central service. The data is encrypted; the key to decrypt is contained in a QR code that is generated through the app. This code is also used to retrieve the data and to start the printing. Thereafter, the user can print out the transmitted content at any PP. It is possible to bundle print jobs, i.e., to trigger multiple printouts, collect them in a print container, and send them only at a specific time. This bears the advantage that the user needs to retrieve a printout at the PP only once via QR code and then will receive all her documents.

The settlement of the print output is effected via the user's account. The user logs in and pays via prepayment or a payment method.

There is also the option not to send the content via a clouds but printing them peer to peer directly at a PP using an encrypted connection. This is necessary especially for particularly sensitive data. Storage in the cloud does not occur.

The retrieval of orders or data is effected by means of legitimation via QR code. This QR code is displayed on the device of the user and can also be passed on to third parties. The data is encrypted; the user can specify the level of encryption. The key is contained in the QR code. The QR code can be securely forwarded to other recipients in the cloud via a virtual private network (VPN) tunnel.

"Shelf life" of the data depends on a setting by the user, but should not be longer than the average time needed to hack the data by means of third-party software without knowledge of the key. Transmission of data from the app occurs via an encrypted channel (e.g., VPN); this channel is set up automatically. The app is programmed such that it runs in an encapsulated sandbox on the device. Display of the QR code occurs directly from the app. Possible variants include exchanging keys (public key) upfront to increase security.

There is the possibility to store the documents sent in the cloud and optionally forward by mail or archive them later. A forwarding via telefax and storage of transmission reports for timely and proven secure transmittal (court proceedings) is also possible.

Conceivably, separate clouds for each country may be set up. This would bear the advantage that the user data is sent only to this cloud. That in turn would impose the restriction that printing may only occur in this country. Among several parties, it may be possible to choose a common storage location. By this, also the problem of data outsourcing into third countries would be solved. To date, there is generally an averseness to storing business data in a non-European country. In such case, the legal situation and applicable provisions for privacy protection are uncertain. With the proposed guaranteed storage, this problem becomes obsolete.

Most PP also feature a high-resolution scanner enabling the user-through her app - to permanently record her documents. This includes extensive documentation of scanning time, scanned object, date of dispatch, destination, and optionally storage of the automatic response.

Further embodiments may introduce a possibility to confirm a legally binding signature by means of electronic signing. This may allow for commercial transactions via the proposed platform.

The accompanying app controls the printout of content. The client can print contents after installing the app and logging in via a cloud. After installing the app, an app icon appears in each application offering the option to print out the screen contents. For the most common applications such as Word, Excel, PowerPoint, Adobe, mails, or photo, there is the possibility to send the current contents for printing. At the PP, the user can then recall the contents she sent for printing even if she had, for example, had no data connection or chosen the option to initiate the printing only at a certain time. This depends on encryption or data connection; to this end, a unique QR code is displayed and presented to the scanner of the PP to legitimize the printout. The QR code being unique, a random retrieval is impossible.

The PP is further equipped with a powerful shredder. The shredder is designed such that the user can see how the destroyed material drops into the final container. Control of the file shredder is possible via the app. This prevents the shredder from being abused by non-customers.

Through the app, it is possible to choose via a menu in which format the printout is to occur. It is also possible to control how many copies should be printed. To activate printing, the user presents her QR code-generated specifically for this printout - to the scanner of the PP. Thereafter, legitimation takes place. The user can now select more print options and start printing. A preview of the expected print on the current terminal is possible. This allows using the opportunity at hand to make optimum use of the presentation at each terminal. Furthermore, an erase function is possible. This deletes the document permanently and reformats the deleted part so that no subsequent recovery is possible.

In another embodiment, it is conceivable that a user makes available a document for printing. She is then credited an amount due for the printing from the respective buyer. Screen printing or copying of the document is not possible.

Further, it is conceivable to provide the document to a receiver. The latter can then edit and return it to the sender for release. A history of changes (who amended, supplemented or deleted what when) is included, which may be released selectively by the latest recipient. Memo functions ease understanding. Potentially, a chat feature is provided to jointly view and edit the document (sharing feature of the counterpart). This documentation of changes is particularly beneficial in contract negotiations to document the contributions of each party for possible use in a court of law. As a rule, it is difficult to agree on a provider or a solution for contract negotiations.

Further, it is possible to scan documents using the camera and make them available in the cloud or share them just like other records. Authenticity of documents as well as consent to or approval of a document, image, or data can be expressed verifiably through the system.

Documents that are stored may be tagged with an expiry date as well as a unique key for tracking. The files, documents, or data expire on the due date independently of which system or medium they are stored on. Copies or reproductions are precluded.

Depending on the configuration, the print output is saved in the cloud even after printing. Otherwise, no storage occurs or the contents will be purged upon printing, respectively. There are also options to save or reedit the file to print. Forwarding to a specific recipient address in a special format such as the portable document format (PDF) is conceivable.

Further, it is conceivable that - depending on a configuration setting - a copy of the printout is sent to the email address or personal computer of the user. Using a software solution, the user can then print this document at home.

### Industrial applicability

The following use cases elucidate the industrial applicability of the invention:

A user is traveling on a plane in offline mode and wants to print a document for an important meeting. For this purpose, she calls the app and triggers the printout. This function is independent of whether she has a data connection or not. In case of doubt, the app buffers the data offline and transmits them to the PP or the cloud of the PP depending on the settings. In the process, the user can choose whether to transmit via mobile data connection (LTE, GPRS, EDGE, etc.) or only via wireless local area network (WLAN). Further, the user can choose if the printout is passed through the cloud or printed at a PP directly via a device such as her smartphone or tablet. Transfer from the device to the PP is encrypted (VPN or similar technology or later solutions). For retrieval or legitimation at an arbitrary PP, the app provides a QR code to the user. The latter can also forward the code to other people for retrieval.

A user is riding on a train and wishes to print a particular document. For this, she sends the contents to the cloud via the app. At the next train station, she can print the contents at the PP using the specific QR Code.

A user needs to countersign papers. A business partner sends her the appropriate QR code from the app. Using this code, the recipient prints the document at any PP. She either both signs it and rescans the document after signing at the PP, or she uses a possible optional technical solution using a signature scanner at the PP to execute the signature. She then receives a printed copy. The business partner receives a note from the PP that the signature was executed and can then further process the document (possibly re-print or use it electronically as a file). Optionally, a technical solution for legally binding signatures or legitimacy (e.g., a scanner for identification cards as an embedded copy for the transaction or using optical character recognition to read the card-related data) can be used at the PP.

Users are taking snapshots and want to print them in a timely manner. For this purpose, they send the photos through the app to a PP. There, they can choose in which format the picture is printed or how many times.

A business partner is revising files on the move. These she wants to send to a partner for printing. She would not like to send an original file (such as Word or Excel) to prevent modification. Therefore, she prefers to send the file to the cloud with the benefit of documentation (what was sent and forwarded when; what contents, screenshot, timestamp, court-admissible evidence, etc.). Thereupon or when sending she decides on how to proceed with the output. This she can just print or send to a business partner via print stream. It is also documented who accessed what document when. Changes can be made only in the cloud; the changes will be sent directly by e-mail to the creator.

A user is traveling and wishes to capture the moment. She takes a picture of herself or her companion. This image she sends to the next PP. She is also provided with templates for fun and unique postcards and pictures. She ends up with a tangible result in hand.

A user wishes to print a file, a picture, or data on the move. For this purpose, she sends them to her home. Via an intermediate step, she creates a connection file and sends it to a destination address (home). At home, she opens the program or it is opened automatically upon clicking the address file. Data reception is effected securely at home. The technique is the same or similar to VPN.

### Citation list

The following documents are cited throughout this document.

### Patent literature

US 9013729 B (OBA KAZUTAKA [US]; HATTORI TOMOKI [US]; RICOH AMERICAS CORP [US]; RICOH CO LTD [JP]) 06.06.2013

### Non-patent literature

GAST, Matthew S., et al. Network Printing: Building Print Services on Heterogeneous Networks. 1st edition. Sebastopol, CA: O'Reilly Media, 2000. ISBN 0596000383. p.1-304.

## Claims

1. Method of printing a document stored on a client wherein
the client sends the document to a stationary printer and
the printer prints the document,
**characterized in that,**
prior to printing, the printer authenticates the client by means of a barcode.

2. Method according to Claim 1,
**characterized in that**
the client is either of the following devices:
a smartphone,
a tablet, or
a portable computer.

3. Method according to Claim 1 or Claim 2,
**characterized in that**
the document is sent to the printer via a server,
wherein the client, the server, and the printer are connected through the Internet.

4. Method according to Claim 3,
**characterized in that**,
upon sending, the server saves the document for possible further use.

5. Method according to Claim 1 or Claim 2,
**characterized in that**
the document is sent directly to the printer,
wherein the client and the printer are connected through a peer-to-peer network.

6. Method according to any of the preceding claims,
**characterized in that**,
prior to sending, the client adds the document to a batch of documents, wherein the documents are sent and printed in batch.

7. Method according to any of the preceding claims,
**characterized in that**
the barcode is a matrix barcode.

8. Method according to Claim 7,
**characterized in that**
the matrix barcode is a quick response code.

9. Method according to any of the preceding claims,
**characterized in that**,
prior to printing, a user of the client signs in to a personal account and the account is charged with the printing.

10. Method according to Claim 9,
**characterized in that**,
the client generates the barcode and,
to authenticate the client, the printer captures the barcode.

11. Method according to Claim 10,
**characterized in that**,
upon generating, the client forwards the barcode to a third party and the third party presents the barcode to the printer.

12. Method according Claim 10 or Claim 11,
**characterized in that**,
prior to sending, the client encrypts the document by means of a symmetric cryptographic key encoded in the barcode and,
upon capturing the barcode, the printer decodes the key and decrypts the document by means of the key.

13. Method according to any of Claim 1 to Claim 11,
**characterized in that**,
prior to sending, the client encrypts the document by means of a public key associated with the printer and,
prior to printing, the printer decrypts the document by means of a private key stored locally on the printer,
wherein the public key and the private key are asymmetric cryptographic keys.

14. Method according to any of the preceding claims,
**characterized in that**,
prior to printing, the printer stores the document for a configurable period of time.

15. Method according to any of the preceding claims,
**characterized in that**
the document is sent by means of a tunneling protocol.

## Amended claims

### Amended claims in accordance with Rule 137(2) EPC.

1. Method of printing a document stored on a client wherein
the client sends the document to a stationary printer,
the printer prints the document and,
prior to printing, the printer authenticates the client by means of a barcode,
**characterized in that,**
prior to sending, the client encrypts the document by means of a public key associated with the printer and,
prior to printing, the printer decrypts the document by means of a private key stored locally on the printer,
wherein the public key and the private key are asymmetric cryptographic keys.

2. Method according to Claim 1,
**characterized in that**
the client is either of the following devices:
a smartphone,
a tablet, or
a portable computer.

3. Method according to Claim 1 or Claim 2,
**characterized in that**
the document is sent to the printer via a server,
wherein the client, the server, and the printer are connected through the Internet.

4. Method according to Claim 3,
**characterized in that,**
upon sending, the server saves the document for possible further use.

5. Method according to Claim 1 or Claim 2,
**characterized in that**
the document is sent directly to the printer,
wherein the client and the printer are connected through a peer-to-peer network.

6. Method according to any of the preceding claims,
**characterized in that,**
prior to sending, the client adds the document to a batch of documents, wherein the documents are sent and printed in batch.

7. Method according to any of the preceding claims,
**characterized in that**
the barcode is a matrix barcode.

8. Method according to Claim 7,
**characterized in that**
the matrix barcode is a quick response code.

9. Method according to any of the preceding claims,
**characterized in that,**
prior to printing, a user of the client signs in to a personal account and the account is charged with the printing.

10. Method according to Claim 9,
**characterized in that,**
the client generates the barcode and,
to authenticate the client, the printer captures the barcode.

11. Method according to Claim 10,
**characterized in that,**
upon generating, the client forwards the barcode to a third party and the third party presents the barcode to the printer.

12. Method according Claim 10 or Claim 11,
**characterized in that,**
prior to sending, the client encrypts the document by means of a symmetric cryptographic key encoded in the barcode and,
upon capturing the barcode, the printer decodes the key and decrypts the document by means of the key.

13. Method according to any of the preceding claims,
**characterized in that,**
prior to printing, the printer stores the document for a configurable period of time.

14. Method according to any of the preceding claims,
**characterized in that**
the document is sent by means of a tunneling protocol.
